# EUROPEAN PATENT APPLICATION

(11) **EP 0 953 860 A2**
(43) Date of publication of application: **03.11.1999**
(21) Application number: 99303443.8
(22) Date of filing: 30.04.1999
(51) Int. Cl.: G02B 21/24

(54) **Improvements in or relating to microscopes**

(30) Priority: 01.05.1998 US 70993
(71) Applicant: Swift Instruments, Inc., Boston, Massachusetts 02125 (US)
(72) Inventor: Hironimus, Timothy M., Modesto, California 95358 (US)
(74) Representative: Bayliss, Geoffrey Cyril

(57) **Abstract**

The disclosure relates to a microscope for viewing a specimen and having a support column (14) extending from a base (12). The microscope includes a focussing mechanism (35) having a rack gear attached to the stage plate (26) (e.g., the stage plate is attached to the rack gear (42) by a fastener and a connecting block (40) and a pinion gear (46) which directly engages the rack gear and, upon rotation, is configured to change the spacing between the objective lens (16) and stage plate. The microscope also includes a rod (56) coupled to and extending coaxially through the pinion gear (46). First and second rotatable manipulators (28,30) (e.g., knobs) are attached to the rod and are configured, upon rotation, to rotate the pinion gear, thereby moving the stage plate relative to the objective lens system such that the rate of stage plate travel conferred by rotating the first manipulator is greater than the rate of stage travel conferred by rotating the second manipulator.

## Description

The invention relates to microscopes.

Most microscopes include a mechanism for allowing a specimen to be brought into focus. One of the simplest mechanisms involves manually adjusting the position of the optical tube to which the eyepiece and objective lens is attached. Other focusing mechanisms utilize gear systems to move the stage plate of the microscope relative to the objective lens.

The invention features a focusing mechanism for a microscope which allows the microscope user to accurately control the position of the stage plate relative to the objective lens.

In a general aspect of the invention, the microscope includes a focusing mechanism having a rack gear attached to the stage plate (e.g., attached via a fastener and a connecting block) and a pinion gear which directly engages the rack gear and, upon rotation, is configured to change the spacing between the objective lens and stage plate. The microscope also includes a rod coupled to and extending coaxially through the pinion gear. A first and second rotatable manipulator (e.g., knobs) are attached to the rod and are configured, upon rotation, to rotate the pinion gear, thereby moving the stage plate relative to the objective lens system such that the rate of stage plate travel conferred by rotating the first manipulator is greater than the rate of stage travel conferred by rotating the second manipulator.

Among other advantages, the direct engagement of the pinion gear and the rack gear leads to more accurate user control of the stage plate position relative to the objective lens for focusing. Known co-axial microscope focusing mechanisms generally include a series of gears disposed between the rotatable manipulators and the stage plate. Such an arrangement leads to rotational creep of the rotatable manipulators, i.e., no movement of the stage plate is observed when the microscope user first begins to turn the manipulators as the user's motion is being transferred through the series of gears disposed between the pinion gear and the rack gear. In the microscope of the present invention, rotational creep is virutally eliminated by having the pinion gear directly engage the rack gear.

Embodiments of this aspect of the invention may include one or more of the following features.

In one embodiment, a plurality of ball bearings are used to couple an indented surface of the rod to a surface of the first rotatable manipulator. Using this or equivalent configurations, the first rate of travel is different (e.g., about twice) than the second rate of travel.

The microscope of the invention can also include one or more of the following features. The first and second rotatable manipulator can be first and second knobs, respectively, the first knob being co-axial to the second knob. The focusing mechanism includes a pinion gear casing enclosing the pinion gear, the casing having a window-like opening through which the pinion gear engages the rack gear. The objective lens system includes a plurality of objective lenses (e.g., three objective lenses of 40X, 60X, and 100X magnification) selectively rotatable into position along an optical axis for viewing the specimen. The microscope further includes a light source for illumination of the specimen. The pinion and rack gear teeth are angled, preferably about 15° to 25° from horizontal, or more preferably about 20° from horizontal. The rack gear can be attached to the support column by an interference fit with a dove way in the support column.

Other advantages and features of the invention will be apparent from the following description with reference to the drawings in which:
Fig. 1 is a perspective view of a microscope having a focusing mechanism of the invention.
Fig. 2 is an exploded view of the focusing mechanism installed in the microscope shown in Fig. 1.
Fig. 3 is a plan view of the pinion gear shown in Fig. 2 with the ball bearing holders and ball bearings shown coupled to the pinion gear.
Fig. 4 is a front view of the rack gear shown in Fig. 2.

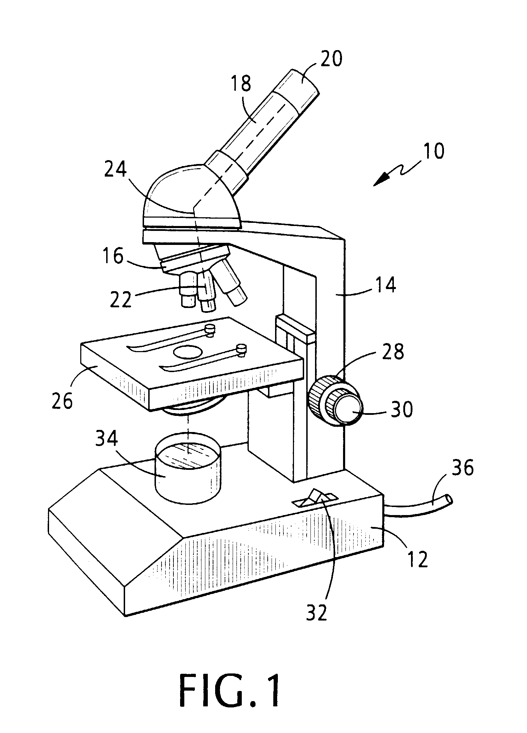

Referring to Fig. 1, a microscope 10 has a support column 14 extending from a rear portion of a base 12. An objective lens system 16 is fixedly mounted to the upper end of support column 14 and includes a tube 18 which optically couples an eyepiece 20 to one of several objective lenses 22. One of the objective lenses 22 is selectively rotated by the user into position along an optical axis 24 for viewing a specimen. The objective lenses provide varying degrees of magnification (e.g., 40X, 60X, and 100X) for viewing the specimen.

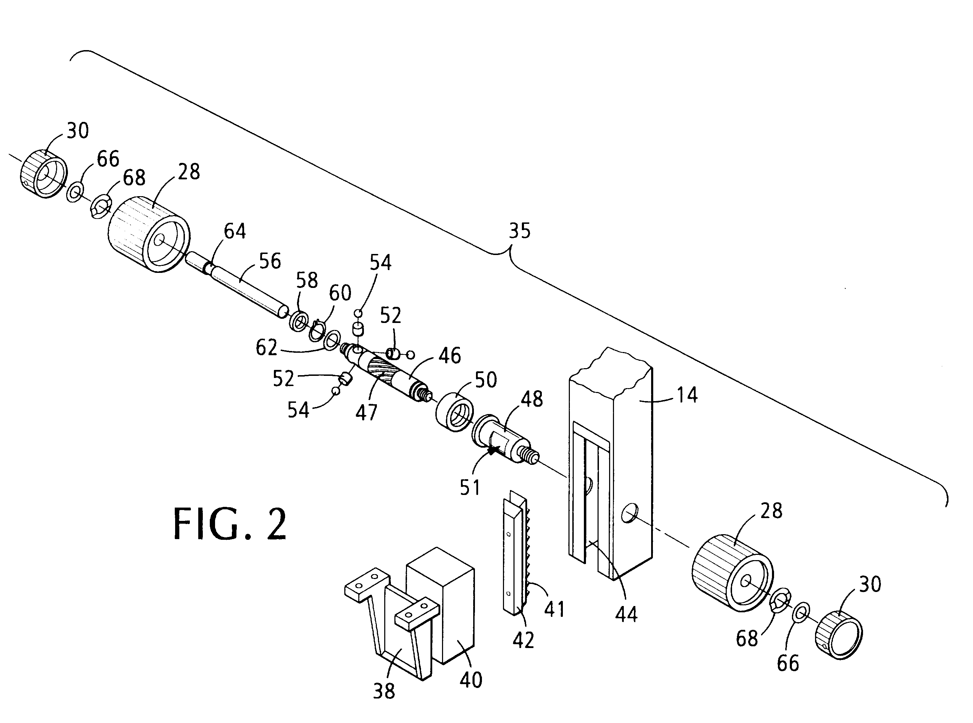

Microscope 10 also includes a stage plate 26 attached to support column 14 which is moved vertically, relative to objective lens system 16, using a focusing mechanism 35 (Fig. 2). In particular, rotation of a coarse focusing knob 28 and a fine focusing knob 30 moves stage plate 26 up or down, relative to objective lens 22. As will be described in greater detail below, the rate of travel provided by turning coarse focusing knob 28 is greater than the rate of travel provided by turning fine focusing knob 30. Microscope 10 also includes a light source 34 positioned on base 12 and below stage plate 26 for illuminating the specimen (not shown). Light source 34 receives electricity via a power switch 32 and a power cord 36 connected to a power source (not shown).

Referring to Fig. 2, an exploded view of focusing mechanism 35 for microscope 10 is shown. Stage plate 26 is attached to support column 14 via a stage plate holder 38, a connecting block 40, and a rack gear 42 having rack gear teeth 41 angled at 20° from horizontal. Rack gear 42 is attached to support column 14 in a dove-tail arrangement and directly engages a pinion gear 46 mounted within support column 14.

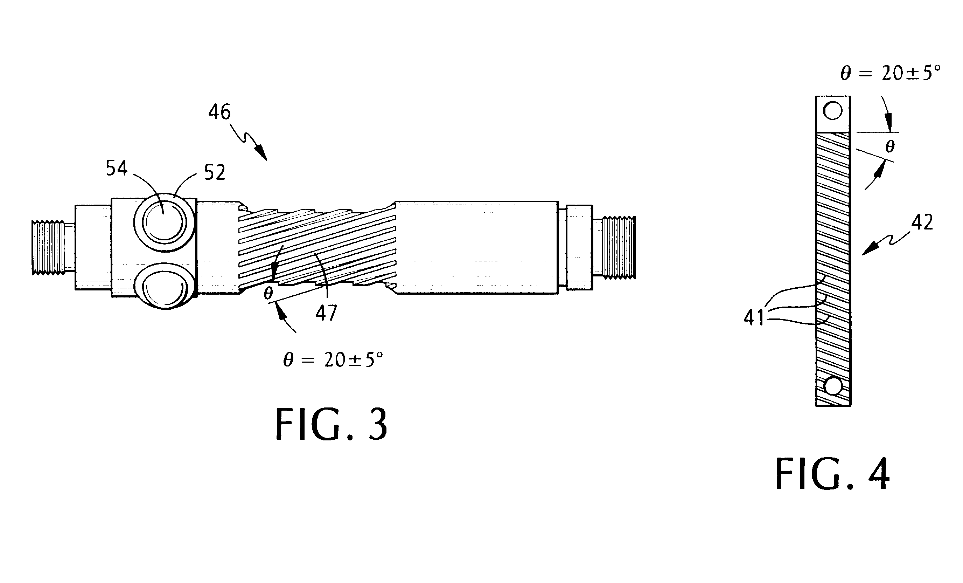

Pinion gear 46 is threaded to and installed inside a pinion gear casing 48 with a coupling 50. Pinion gear casing 48 contains a window-like opening 51 through which teeth 47 of pinion gear 46 engage rack gear 42. The pinion gear casing 48 protects pinion gear 46 from dust and is mounted inside support column 14, thereby providing a means of coupling piniong gear 46 to support column 14. At one end of the pinion gear, ball bearing holders 52 pass through the wall of pinion gear 46 and support 8 mm ball bearings 54, which are free to rotate within holders 52 (see Fig. 3). Ball bearings 54 are further enclosed in a race 62. A cylindrical rod 56 extends co-axially through pinion gear 46, engaging teeth 47, and is coupled to the pinion gear 46 by a loosely-installed retainer ring 58. A spring wave washer 60 is used to maintain race 62 with bearings 54 in compression. Rod 56 has an indented surface 64 sized to engage ball bearings 54 when rod 56 is coupled to the pinion gear 46. Course focusing knob 28 straddles pinion gear 46 and contacts race 62 so that rotation of knob 28 axially turns rod 56 through rolling action of ball bearings 54. Since ball bearings 54 contact indented surface 64 of rod 56, each turn of knob 28 results in more than one axial rotation of rod 56, and consequently, of pinion gear 46. Fine focusing knob 30 is directly attached to the ends of rod 56 with spring wave washer 66 and retainer ring 68 so that each turn of knob 30 results in one axial rotation of rod 56 and pinion gear 46.

Referring to Figs. 3 and 4, a plan view of pinion gear 46 is shown in Fig. 3 with ball bearing holders 52 and ball bearings 54 installed, and a front view of rack gear 42 is shown in Fig. 4. Pinion gear 46 includes teeth 47 which, like rack gear teeth 41, is angled at 20° from horizontal so that the two gears mesh. Rack gear teeth 41 and pinion gear teeth 47 are angled to decrease the chances of either teeth being damaged during rough use.

## Claims

1. A microscope for viewing a specimen and having a support column extending from a base, the microscope comprising:
a stage plate attached to the support column and having an upper surface upon which the specimen is placed for viewing;
an objective lens system fixedly attached to the support column; and
a focusing mechanism disposed between the support column and the stage plate, the focusing mechanism including:
a rack gear attached to the stage plate;
a pinion gear which directly engages the rack gear and, upon rotation, is configured to change the spacing between the objective lens system and stage plate;
a rod coupled to and extending coaxially through the pinion gear;
a first rotatable manipulator attached to the rod and configured, upon rotation, to move the stage plate relative to the objective lens system at a first rate of travel; and
a second rotatable manipulator attached to the rod and configured, upon rotation, to move the stage plate relative to the objective lens system at a second rate of travel less than the first rate of travel.

2. The microscope of claim 1, wherein the pinion gear teeth is angled.

3. The microscope of claim 2, wherein the angle of the pinion gear teeth is about 15° to 25° from horizontal.

4. The microscope of claim 3, wherein the angle of the pinion gear teeth is about 20° from horizontal.

5. The microscope of any of claims 1 to 4, wherein the rod has a circumferential indented surface sized to engage a plurality of ball bearings.

6. The microscope of claim 5, wherein the focusing mechanism further includes a plurality of ball bearings fixed through the wall of the pinion gear, the ball bearings engaging the indented surface of the rod.

7. The microscope of claim 6, wherein the first rate of travel is about twice the second rate of travel.

8. The microscope of claim 7, wherein the first rotatable manipulator is coaxial to the second rotatable manipulator.

9. The microscope of any of claims 1 to 8, the focusing mechanism further comprising a pinion gear casing enclosing the pinion gear, the casing having a window through which the pinion gear engages the rack gear.

10. The microscope of any of claims 1 to 9, further comprising a fastener directly attached to the stage plate and a connecting block disposed between the fastener and the rack gear.

11. The microscope of any of claims 1 to 10, wherein the rack gear is attached to the support column by an interference fit with a dove way in the support column.

12. The microscope of any of claims 1 to 11, the objective lens system comprising a plurality of objective lenses selectively rotatable into position along an optical axis for viewing the specimen.

13. The microscope of any of claims 1 to 12, further comprising a light source for illumination of the specimen.

14. A microscope for viewing a specimen and having a support column extending from a base, the microscope comprising:
a stage plate attached to the support column and having an upper surface upon which the specimen is placed for viewing;
an objective lens system fixedly attached to the support column;
a focusing mechanism disposed between the support column and the stage plate, the focusing mechanism including:
a rack gear having angled rack gear teeth attached to the stage plate;
a pinion gear having angled pinion gear teeth which directly engages the rack gear teeth and, upon rotation, is configured to change the spacing between the objective lens system and stage plate, the pinion gear teeth being angled;
a pinion gear casing enclosing the pinion gear, the casing having an opening through which the pinion gear engages the rack gear;
a rod coupled to and extending coaxially through the pinion gear, the rod having a circumferential indented surface;
ball bearings fixed through the wall of the pinion gear, the ball bearings engaging the indented surface of the rod and coupled to a surface of a rotatable knob, the indented surface sized to engage the ball bearings;
a first rotatable knob attached to the rod and configured, upon rotation, to move the stage plate relative to the objective lens system at a first rate of travel; and
a second rotatable knob attached to the rod and co-axially installed to the second knob, the second knob configured, upon rotation, to move the stage plate relative to the objective lens system at a second rate of travel less than the first rate of travel.
